# FASCICULE DE BREVET EUROPEEN

(11) **EP 0 490 315 B1**
(45) Date de publication et mention de la délivrance du brevet: **27.05.1998**
(21) Numéro de dépôt: 91121080.5
(22) Date de dépôt: 09.12.1991
(51) Int. Cl.: H04J 3/06

(54) **Procédé destiné à assurer la permanence de la synchronisation des noeuds d'un réseau privé de télécommunications sur la meilleure des horloges disponibles et réseau correspondant**
Verfahren zur permanenter Sicherstellung der Synchronisation der Knoten in einem privaten Übertragungsnetzwerk mit dem besten verfügbaren Taktsignal und ein solches Netzwerk
Method for permanently ensuring the synchronisation of the nodes of a private telecommunication network to the best available clock, and corresponding network

(30) Priorité: 11.12.1990 FR 9015496
(43) Date de publication de la demande: 17.06.1992
(73) Titulaire: ALCATEL ALSTHOM COMPAGNIE GENERALE D'ELECTRICITE, 75008 Paris (FR)
(72) Inventeur: Cordonnier, Christine, F-67200 Wolfisheim (FR); Gass, Raymond, F-67150 Bolsenheim (FR)
(74) Mandataire: Pothet, Jean Rémy Emile Ludovic

(56) Documents cités:
- EP-A- 0 262 705
- IBM TECHNICAL DISCLOSURE BULLETIN vol. 25, no. 11B, Avril 1983, NEW YORK (US) pages 6293 - 6298; L.S. ROGERS: 'clock source selection method in distributed communication system network.'

## Description

L'invention concerne un procédé destiné à assurer la permanence de la synchronisation des noeuds d'un réseau privé de télécommunications sur la meilleure des horloges disponibles; elle concerne aussi un réseau privé de télécommunications agencé pour mettre en oeuvre le procédé évoqué ci-dessus.

La synchronisation des noeuds des réseaux de télécommunications, notamment publics, s'organise classiquement selon une structure de distribution où une horloge maître, de très haute qualité, éventuellement choisie parmi plusieurs possibles, produit des signaux de synchronisation pour un ensemble d'horloges esclaves qui sont réparties dans les différents noeuds du réseau de télécommunications afin d'en assurer le fonctionnement.

Dans les très grands réseaux, une organisation hiérarchisée des différentes horloges a classiquement été adoptée, elle est habituellement placée sous la supervision d'un personnel d'exploitation chargé d'assurer la permanence d'une synchronisation optimale.

Ce personnel dispose, en conséquence, de moyens d'information et d'intervention appropriés, par exemple au niveau d'un centre moniteur, il assure notamment les modifications de configuration de la structure de distribution de signaux d'horloge qui sont rendues nécessaires par les divers événements susceptibles d'affecter la distribution d'horloge, notamment les défaillances au niveau des liens ou des équipements des noeuds.

Pour diverses raisons, notamment économiques, une telle solution ne convient pas bien pour les réseaux privés de télécommunications qui n'ont pas la taille des grands réseaux publics et pour lesquels, d'une part, la présence constante d'un personnel superviseur n'est pas souhaitée, d'autre part, la liberté de choix des solutions techniques optimales est limitée par des questions de coût.

Le document intitulé "Clock source selection method in distributed communication system network" publié par L. S. ROGERS dans le volume 25,, N°11B, d'avril 1983, d'IBM Technical Disclosure Bulletin décrit un procédé de sélection de la meilleure source de signaux d'horloge disponible pour chacun des noeuds d'un réseau de communication par échanges d'informations organisés pour permettre une sélection par enchères successives au niveau des différents noeuds.

Le document EP-A-262705 décrit un procédé de synchronisation hiérarchisé exploitant un canal de commande pour envoyer des messages d'horloge, des messages de recherche de maître et des messages de remise à l'heure pour assurer une réorganisation de la structure de distribution d'horloge entre noeuds, quand il en est besoin.

L'invention propose un procédé qui, associant une phase préliminaire de configuration à une phase de gestion, assure une permanence de la synchronisation des noeuds d'un réseau privé de télécommunications sur la meilleure des horloges disponible, chaque noeud du réseau étant normalement synchronisé par des signaux d'horloge d'origine externe qui lui parviennent par une des entrées individuelles de liaison de transmission numérique d'informations et notamment de signaux d'horloge qu'il comporte. Les noeuds de réseau privé comportent chacun au moins deux entrées de liaison de transmission numérique d'informations déterminant ensemble un arbre de synchronisation, auquel éventuellement se relient les noeuds qui ne disposent que d'une seule entrée de liaison de transmission numérique d'informations. Le procédé prévoit qu'en cas de perte ou de perte de validité - des signaux d'horloge transmis à l'un des noeuds déterminant l'arbre, un échange d'informations est déclenché, à l'initiative du premier noeud ayant constaté une perte, avec des noeuds de l'arbre auxquels il est relié en point-à-point, la dépendance ou non d'un noeud de l'arbre par rapport aux signaux d'horloge transmis par un autre noeud de l'arbre, via une des liaisons de transmission numérique d'informations, se déterminant par échange d'informations de noeud à noeud en fonction de potentialités respectives de fourniture de signaux d'horloge initialement attribuées à chacun des noeuds de l'arbre et des niveaux de qualité des signaux d'horloge dont chacun de ces noeuds dispose,
Selon une caractéristique de l'invention, le procédé prévoit que deux entrées de liaison de transmission numérique d'informations de chacun des noeuds de l'arbre sont présélectionnées l'une en tant qu'entrée d'horloge pilote principale et l'autre en tant qu'entrée d'horloge pilote de secours, chaque noeud de l'arbre étant présélectionné pour être ou non fournisseur potentiel de signaux d'horloge vis-à-vis du ou des noeuds de l'arbre au(x)quel(s) il est relié en point-à-point par une liaison de transmission numérique d'informations, en ce que chaque noeud de l'arbre sélectionne lui-même la provenance des signaux par rapport auxquels il se synchronise, en cas de perte des signaux d'horloge d'origine externe à lui, jusqu'alors reçus, via une de ses deux entrées d'horloge pilote, soit directement par lui-même, soit par l'intermédiaire d'un autre noeud de l'arbre et en ce que l'échange d'informations entre deux noeuds reliés en point-à-point de l'arbre en cas de perte des signaux d'horloge reçus par l'un d'eux se traduit par une proposition de synchronisation de l'un sur les signaux provenant de l'autre qui est émise par le premier des deux noeuds qui a connaissance de cette perte et qui est fonction de la potentialité affectée à ce premier noeud d'être fournisseur d'horloge ou non vis-à-vis de l'autre.

L'invention propose aussi un réseau privé de télécommunications, pour la mise en oeuvre du procédé selon au moins l'une des revendications 1 à 3, composé de noeuds reliés entre eux en point-à-point par des liaisons de transmission numérique d'informations, chaque noeud étant normalement synchronisé par des signaux d'horloge externe qui sont transmis par une des entrées individuelles de liaison du noeud par un autre noeud du réseau privé ou par un noeud de réseau public, chaque noeud de réseau privé comportant des moyens lui permettant d'échanger des informations de sélection d'horloge avec chacun des noeuds auxquels ce noeud est relié en point-à-point, chaque noeud comportant des moyens de choix de signaux d'horloge permettant une sélection de provenance en fonction de présélections propres à ce noeud mémorisées au niveau de ce noeud et de niveaux de qualité de signaux d'horloge d'origine externe, ou à défaut interne, restant disponible pour le noeud en cas de perte - ou de perte de validité - des signaux d'horloge jusqu'alors reçus.

Selon une caractéristique de l'invention, la réponse d'un noeud de l'arbre de synchronisation à une proposition de synchronisation provenant d'un autre noeud auquel il est relié en point-à-point est ou non un acquiescement dépendant du niveau de qualité des signaux d'horloge dont il dispose par ailleurs.

Selon une caractéristique de l'invention, le réseau comporte un arbre de synchronisation composé des noeuds du réseau privé qui comportent au moins deux entrées de liaison de transmission numérique d'informations, en ce que deux des entrées de chacun des noeuds de l'arbre sont présélectionnées l'une en tant qu'entrée d'horloge pilote principale et l'autre en tant qu'entrée d'horloge pilote de secours pour ce noeud, chaque noeud de l'arbre étant présélectionné pour être ou non fournisseur potentiel de signaux d'horloge vis-à-vis du ou des noeuds de l'arbre au(x)quel(s) il est relié en point-à-point par une ou des liaisons de transmission numérique d'informations.

L'invention, ses caractéristiques et ses avantages sont précisés dans la description qui suit, en liaison avec les figures répertoriées ci-dessous.

La figure 1 présente un exemple de structure de réseau privé de télécommunications.

La figure 2 présente un exemple d'installation de commutation numérique d'un noeud de réseau de télécommunications.

La figure 3 présente un exemple d'arbre de synchronisation prévu pour le réseau privé de télécommunications schématisé en figure 1.

Le procédé de configuration et de gestion de la structure de distribution de signaux d'horloge d'un réseau privé de télécommunications qui est proposé par l'invention, est destiné à être mis en oeuvre dans le cadre d'un réseau de télécommunications 1 composé d'une pluralité de noeuds 2 constitués chacun par une installation de commutation numérique.

Des liens 3, composés chacun d'au moins une liaison de transmission numérique d'informations qui est bidirectionnelle, relient entre eux et en point-à-point les noeuds du réseau considéré.

Ces liens 3 qui transmettent des informations, sous forme numérique, sont constitués par exemple au moyen de liaisons multiplexes temporelles selon la recommandation G.704 du CCITT, cet exemple ne devant pas être considéré comme limitatif.

Chaque noeud 2 est relié à au moins un autre noeud du réseau 1 qui le comporte, il est aussi susceptible d'être relié à un ou plusieurs autres noeuds 4 de réseau public de télécommunications, ces noeuds 4 appartenant éventuellement à des réseaux publics différents, par exemple dans une zone frontalière entre deux pays.

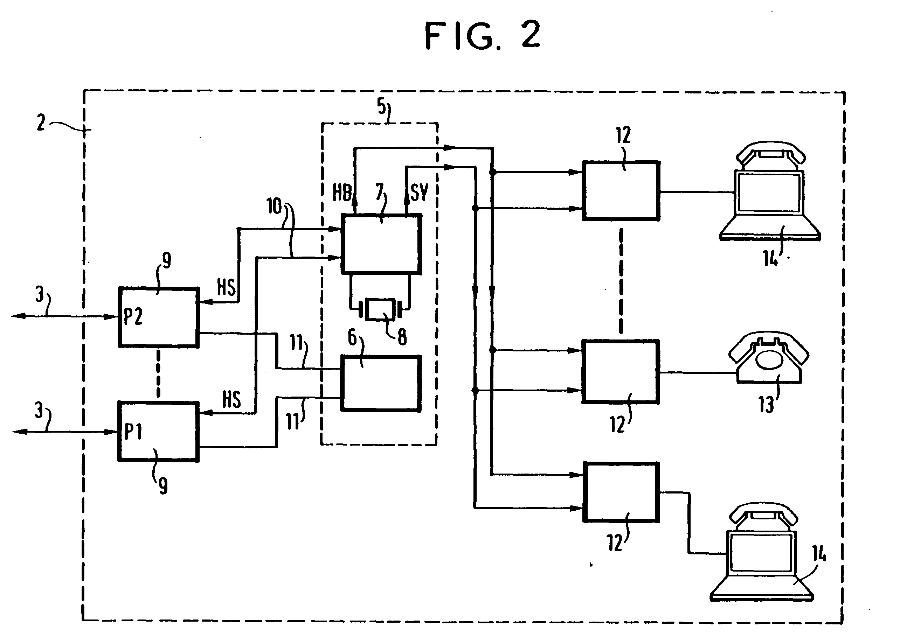

Un exemple de structure de noeud 2 de réseau de télécommunications est présenté en figure 2.

Ce noeud 2 est réalisé de manière connue par assemblage d'unités constitutives modulaires spécialisées qui sont interconnectées en fonction des besoins, il comporte notamment une logique de commande 5, classiquement organisée autour d'au moins un processeur 6 auquel sont associées des mémoires non représentées qui contiennent au moins une partie des programmes nécessaires au fonctionnement du noeud dans son environnement, soit plus précisément dans le cadre du réseau de télécommunications auquel il appartient.

Dans l'exemple proposé, la logique de commande 5 contient aussi une horloge 7 qui est chargée de fournir au noeud 2 les signaux temporels d'horloge HB qui lui sont nécessaires, ceux-ci se déduisent soit des signaux produits par un oscillateur local 8, symbolisé ici par un oscillateur à quartz, soit de signaux d'horloge HS provenant d'horloges, extérieures au noeud et non représentées, via les liens 3.

Les signaux d'horloge HS éventuellement reçus par l'horloge 7 d'un noeud sont produits soit par l'horloge 7 d'un autre noeud 2 du même réseau privé, soit par une horloge non représentée d'un réseau public, ces dernières étant considérées comme devant être dominantes en raison de leurs qualités supposées.

Les liens 3 qui unissent les noeuds 2, en point-à-point, soit entre eux, soit à des noeuds 4, aboutissent à des coupleurs spécialisés, dits de lien, qui sont référencés 9 dans le noeud numérique présenté sur la figure 2.

D'une façon classique, qui ne sera pas précisée ici dans la mesure où elle n'a qu'un rapport indirect avec l'invention, chaque coupleur 9 de lien 3 est agencé pour pouvoir combiner de manière prédéterminée les signaux d'information, de signalisation et d'horloge destinés à être émis par le noeud 2, qui le comporte, vers un autre noeud, par exemple sur une liaison multiplexe temporelle unidirectionnelle d'un lien 3, à laquelle ce coupleur est relié par un port tel que P1 ou P2.

Réciproquement, chaque coupleur 9 est aussi agencé pour pouvoir dissocier les divers types de signaux évoqués ci-dessus, lorsque ceux-ci lui parviennent par une entrée de signaux d'horloge de l'un des ses ports en provenance dudit autre noeud, via une liaison de sens inverse de celle évoquée ci-dessus.

Pour ces opérations chacun des coupleurs 9 d'un noeud est relié à la logique de commande 5 de ce dernier d'une part au niveau de l'horloge 7 par des liaisons internes 10, ici représentées individuelles, d'autre part au niveau du processeur 6 par un lien 11, chargé d'assurer les transmissions des signaux d'information et de signalisation.

D'autres liens, ici non représentés car sans rapport direct avec l'invention, permettent de relier d'autres équipements au processeur 6 et aux coupleurs 9 de lien 3, ces équipements étant par exemple des coupleurs 12, dits de terminaux, prévus pour la desserte des divers terminaux rattachés au noeud considéré, ces terminaux étant symbolisés ici par un poste téléphonique numérique 13, et par des terminaux télématiques 14.

De manière connue, non développée ici, l'horloge 7 du noeud 2 fournit aux coupleurs de terminaux 12 des signaux d'horloge HB et de synchronisation SY qui sont nécessaires au fonctionnement des terminaux 13, 14 que ces coupleurs desservent respectivement. Elle fournit aussi les signaux d'horloge nécessaires au fonctionnement des coupleurs de lien 9 qui, comme indiqué plus haut, sont soit des signaux produits par l'horloge 7 à partir de son oscillateur local 8, soit des signaux extraits par cette horloge 7 de signaux d'horloge HS reçus d'un des coupleurs 9 de lien 3 du noeud 2 qui la comporte en provenance d'une horloge d'un autre noeud 2 ou 4.

Comme indiqué plus haut, dans le préambule de cette demande, la stratégie de synchronisation du réseau 1 vise à atteindre un niveau maximal de qualité des signaux d'horloge distribués aux différents noeuds, en particulier si le réseau 1 considéré est relié à des noeuds de réseau public.

La recommandation G.822 du CCITT définit les règles de qualité, en particulier le nombre de sauts de trame admissibles dans les échanges entre un noeud 2 de réseau privé et un noeud 4 de réseau public.

Un premier examen de cette recommandation indique que la précision requise pour une horloge locale isolée est de l'ordre de 2,7.10⁻⁹, correspondant à un saut de trame par jour, ce qui correspond à une horloge 7 d'un coût très élevé, pratiquement inacceptable pour un réseau privé.

Une première solution consiste à profiter des signaux produits par d'éventuelles horloges de qualité qui sont normalement accessibles bien qu'étant extérieures au réseau 1 considéré.

Ceci est possible si les signaux d'horloge présentant les qualités requises sont disponibles au niveau d'au moins un noeud 4 extérieur avec lequel au moins un noeud 2 du réseau 1 est relié par un lien 3.

Tel est le cas notamment lorsque le réseau 1 est un réseau de type privé relié à au moins un noeud 4 d'un réseau public par au moins un de ses propres noeuds 2, l'horloge du noeud 4 ayant le niveau de qualité requis, ce qui permet aux différents noeuds du réseau privé de se synchroniser comme exigé, par transmission de proche en proche entre noeuds 2 du réseau privé considéré et selon un procédé qui est précisé plus loin, en prenant comme référence l'horloge obtenue du réseau public.

En second lieu, il est prévu par la recommandation G.822 évoquée ci-dessus que la précision soit réduite à 0,4.10⁻⁶, soit douze sauts de trame en une heure dans 0,4% des cas, ce qui correspond pratiquement à la probabilité d'une panne de lien 3. Or l'obtention d'une telle précision au cours du temps au niveau d'un réseau en exploitation est difficile à garantir sauf si des précautions spécifiques coûteuses sont prises, ce qui convient mal dans l'hypothèse d'un réseau réduit tel qu'évoqué plus haut.

En troisième lieu, la recommandation G822 prévoit que marginalement dans 0,04% des cas, aucune contrainte n'est fixée, ceci correspond pratiquement au cas d'une panne double, c'est-à dire à 1% de 1% soit une probabilité de panne de 10⁻⁴.

En conséquence, il est nécessaire de se prémunir vis à vis des effets d'une panne simple au niveau d'un noeud 2, ce qui implique qu'un noeud dispose, si possible, d'au moins deux possibilités distinctes d'entrée de signaux d'horloge de niveau de qualité requis si lui-même n'est pas apte à produire de manière interne des signaux ayant ce niveau.

Ceci est obtenu selon l'invention, en configurant initialement le réseau 1, de manière que, si possible, chaque noeud 2 dispose de deux entrées de signaux d'horloge, dites pilotes, pour sa synchronisation, ces deux entrées étant indépendamment reliées chacune à une des liaisons de transmission d'horloge constituées par exemple par les liaisons de transmission numérique d'informations de lien 3 reliant en point-à-point ce noeud 2 à d'autres noeuds 2 ou 4. Ceci ne concerne pas bien entendu les noeuds à une seule entrée, tel que le noeud 2C - figure 3 -.

La structure de distribution des signaux d'horloge pour un réseau privé donné se présente sous forme d'un arbre de synchronisation dans lequel se retrouvent notamment tous les noeuds de ce réseau pour lesquels deux entrées d'horloge pilote ont été présélectionnées et qui sont en conséquence reliés à deux autres noeuds du réseau privé ou éventuellement d'un réseau public. Cet arbre comporte aussi, éventuellement, les noeuds du réseau privé considéré qui ne disposent que d'une seule entrée d'horloge pilote.

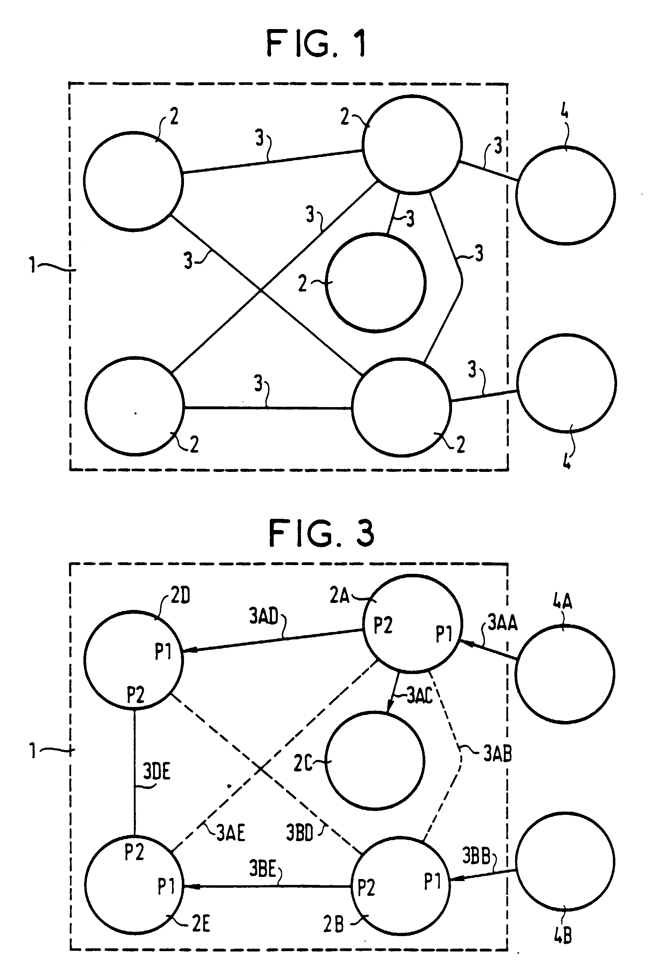

Un exemple d'arbre de synchronisation configuré selon l'invention est montré en figure 3 pour le réseau 1 proposé en figure 1 dont les cinq noeuds sont ici référencés 2A à 2E.

Ce réseau 1 est ici supposé, d'une part, de type privé et d'autre part relié à deux noeuds 4A, 4B d'un réseau public. De manière générale, les noeuds d'un réseau privé relié à un réseau public doivent se synchroniser par rapport à ce réseau public, il est donc initialement prévu que les signaux d'horloge, transmis d'un noeud de réseau public vers un noeud du réseau 1, par une liaison de transmission numérique unissant ces deux noeuds, servent de signaux d'horloge pilote principale pour le noeud du réseau privé.

Ainsi les signaux d'horloge du noeud 4A du réseau public qui sont transmis par une liaison de transmission d'horloge 3AA, reliant les noeuds 4A et 2A, sont normalement exploités en tant que signaux d'horloge pilote principale par le noeud 2A, il en est de même pour les signaux d'horloge du noeud 4B qui sont transmis par une liaison de transmission d'horloge 3BB vers le noeud 2B où ils sont exploités en tant que signaux d'horloge pilote principale.

Toutefois pour les raisons évoquées plus haut, il est souhaitable que chaque noeud du réseau 1 puisse disposer d'une horloge pilote de secours qui soit apte à lui fournir des signaux d'horloge au cas où les signaux d'horloge principale normalement reçus ne sont plus exploitables par suite d'une défaillance quelconque, si les signaux d'horloge que ce noeud produit lui-même n'ont pas la qualité requise, ce qui est généralement le cas.

En conséquence, le réseau de télécommunications 1 est initialement configuré de manière que chaque noeud disposant d'entrées individuelles au niveau de leurs ports pour au moins deux liaisons de transmission numérique d'informations, soit susceptible de disposer par présélection des signaux d'horloge pilote provenant de deux entrées individuelles desservies, en tant que signaux respectifs d'horloge principale et d'horloge de secours, en fonction de la qualité des signaux d'horloge susceptibles d'être transmis au noeud par les noeuds auxquels il est relié par les deux entrées individuelles concernées.

Il est donc possible au niveau de chaque noeud du réseau 1, disposant d'au moins deux entrées potentielles de signaux d'horloge, de définir et de mémoriser, par référence à leurs entrées au niveau du noeud, deux liaisons de transmission d'horloge présélectionnées pour fournir de tels signaux, telles les liaisons 3BE et 3DE pour le noeud 2E.

Dans la mesure où le sens de transmission des signaux d'horloge est susceptible de s'inverser pour une liaison suite à un événement affectant la distribution de ces signaux c'est par référence au port d'entrée/ sortie que seront ici identifiées les liaisons de transmission d'horloge au niveau de chaque noeud.

Ainsi la liaison de transmission d'horloge, choisie pour fournir les signaux d'horloge pilote principale à un noeud est identifiée par référence au port P1 où elle aboutit.

Le port P2 d'un noeud servant identiquement à identifier l'entrée à laquelle aboutit la liaison de transmission d'horloge, choisie pour fournir l'horloge pilote de secours associée à une horloge pilote principale.

Dans le cadre de l'invention, ces choix sont figés et définissent une configuration d'arbre de synchronisation du réseau privé où se retrouve en premier lieu tous les noeuds disposant de deux entrées individuelles de liaison de transmission numérique d'informations, éventuellement les noeuds qui ne disposent que d'une seule de ces entrées et en dernier lieu toutes les liaisons présélectionnées pour la transmission de signaux d'horloge pour les différents noeuds du réseau privé considéré.

Un tel arbre de synchronisation reste normalement inchangé en l'absence de réinitialisation globale du réseau privé, celle-ci se produisant par exemple suite à une adjonction modifiant le réseau 1.

Par contre la distribution des signaux d'horloge, dans le cadre de cet arbre de synchronisation figé, est susceptible d'évoluer en fonction des événements intervenant au cours du temps. Dans la configuration censée être représentée en figure 3, chaque noeud à deux entrées du réseau 1 est piloté par des signaux d'horloge qui lui parviennent par celui de ses ports qui a été initialement choisi comme port P1 pour lui, c'est-à-dire par son entrée d'horloge pilote principale.

Ainsi le port P1 du noeud 2A désigne alors celui des ports de ce noeud où aboutit la liaison de transmission d'horloge 3AA qui fournit les signaux d'horloge pilote principale , ces derniers provenant du noeud 4A d'un réseau public.

Il en est de même pour le port P1 du noeud 2B auquel aboutit une liaison de transmission d'horloge 3BB unissant les noeuds 2B et 4B, ce dernier appartenant à un réseau public qui est éventuellement différent de celui auquel appartient le noeud 4A.

Pour les noeuds à deux entrées du réseau 1 qui ne sont pas reliés à un noeud de réseau public, les ports P1 choisis correspondent aux entrées de liaisons de transmission d'horloge qui, comme indiqué plus haut, sont censées fournir les signaux de la meilleure horloge pilote disponible à partir d'un noeud adjacent, tel le port P1 du noeud 2D recevant des signaux d'horloge pilote principale du noeud adjacent 2A, via la liaison 3AD.

Il en est de même pour les ports P2 de tous les noeuds du réseau 1 qui sont choisis parmi ceux qui sont susceptibles de fournir les signaux de la meilleure horloge pilote disponible à partir d'un noeud adjacent, hormis bien entendu ceux choisis comme ports P1.

Cette meilleure horloge pilote disponible en secours peut éventuellement être de même qualité que l'horloge pilote principale pour un noeud donné, par exemple si le noeud considéré est relié à un même réseau public par deux liaisons multiplexes temporelles entrantes différentes.

En conséquence, en configuration initiale, chaque noeud du réseau 1 dispose préférablement de deux entrées différentes de signaux d'horloge pilote qui sont reliées chacune à une liaison de transmission numérique différente et qui font partie chacune d'un port différent du noeud, tel par exemple le noeud 2E structuré en configuration initiale pour recevoir des signaux d'horloge principale du noeud 2B par une liaison de transmission d'horloge 3BE ou éventuellement des signaux d'horloge pilote de secours en provenance du noeud 2D par une liaison de transmission d'horloge du lien 3DE.

Toute autre liaison de transmission numérique unissant le noeud 2E à un autre noeud, telle la liaison 3AE n'est alors pas incluse dans l'arbre de synchronisation du réseau 1, tel que considéré ici.

Une défaillance affectant cet arbre de synchronisation du réseau 1 au niveau de l'un de ses noeuds ou de l'une des liaisons de transmission d'horloge pilote, est susceptible de conduire à une réorganisation partielle de la structure de distribution d'horloge, en vigueur jusqu'alors.

Selon l'invention, cette réorganisation partielle est réalisable de manière automatique par le réseau 1 lui-même en mettant à profit les possibilités d'échanges d'information offertes par les liaisons de transmission numérique d'informations qui servent pour la transmission des signaux d'horloge et les possibilités de traitement d'information offertes par les processeurs contenus dans les noeuds.

L'apparition d'un événement affectant la distribution d'horloge du réseau 1 est détectée par le ou les noeuds qui sont directement affectés mais n'est éventuellement pas détectable par les noeuds qui dépendent de ce ou ces noeuds directement affectés.

En effet, en l'absence de mesures particulière, ces noeuds dépendants sont susceptibles de continuer à recevoir les signaux d'horloge pilote qui leurs sont nécessaires, dans la mesure où une autre source d'horloge se substitue normalement à la source défaillante au niveau du ou de chacun des noeuds directement affectés, même si la qualité des signaux d'horloge pilote alors fournis aux noeuds dépendants n'est plus exactement la même que précédemment.

Afin de tenter de retrouver cette qualité, il faut que chaque noeud dépendant puisse connaître les possibilités présentes du ou des deux noeuds auxquels il est relié par liaison présélectionnée de transmission d'horloge, via soit un seul port, soit préférablement ses deux ports P1 et P2, pour pouvoir obtenir les signaux pilotes les mieux appropriés.

Il est donc prévu des échanges d'informations entre les noeuds qui sont reliés entre eux par des liaisons de transmission participant à l'arbre de synchronisation pour la distribution d'horloge, pour que chaque noeud de cet arbre puisse s'assurer lui-même que les signaux d'horloge qu'il reçoit proviennent de la meilleure des sources accessibles.

Chaque noeud du réseau 1 comporte donc des moyens de type émetteurs-récepteurs permettant d'échanger individuellement des informations avec tous les noeuds adjacents de ce réseau auxquels il est relié en point-à-point par une liaison de transmission numérique reliant entre eux deux noeuds de l'arbre de synchronisation assurant la distribution d'horloge dans le réseau 1.

Ces informations sont ici obtenues à partir de données caractéristiques de noeud qui sont fixées lors de la configuration initiale pour un arbre de synchronisation donné dans une structure de réseau 1 donnée et qui sont conservées par le noeud qu'elles concernent.

Dans la réalisation envisagée, les données caractéristiques d'un noeud sont composées d'une indication relative au niveau de qualité théorique de la source de signaux d'horloge alimentant chacune de ses deux entrées d'horloge pilote et d'une indication relative à la potentialité du noeud d'être fournisseur de signaux d'horloge vis-à-vis de chacun des autres noeuds auxquels il est relié par une liaison de transmission numérique via l'une de ses entrées d'horloge pilote et par conséquent via le port P1 ou P2 correspondant.

Dans le cas présent, l'indication de niveau de qualité propre à un noeud est de type binaire et elle précise si les signaux d'horloge pilote destinés à être reçus par l'intermédiaire d'un port P1 ou P2 de ce noeud proviennent d'un noeud adjacent d'un réseau public et sont donc supposés conformes aux strictes normes de ces réseaux ou s'ils proviennent d'un autre noeud du réseau de télécommunications 1.

De même, sont de type binaire fixe les indications relatives à la potentialité attribuée ou non à un noeud du réseau 1 d'être fournisseur de signaux d'horloge vis à vis des autres noeuds du même réseau, auxquels il est relié par des liaisons de transmission numérique par ses entrées pilotes d'horloge dans le cadre d'un arbre de synchronisation donné.

Il est ainsi possible de définir sept variantes significatives possibles de combinaisons de ces deux indications et par conséquent sept états stables possibles pour les différents noeuds de réseau 1 supposés pilotés chacun via son port P1.

C'est par exemple une perte ou une perte de validité des signaux d'horloge reçus au niveau d'un des noeuds du réseau 1 qui déclenche l'émission d'une première information par le noeud concerné vers chacun des noeuds adjacents auxquels il est relié par une liaison de transmission numérique via une de ses entrées d'horloge pilote dans le cadre de l'arbre de transmission en vigueur. Cette information, de même que celles qui seront définies plus loin, est par exemple transmise au cours de trois des temps de bit autrement disponibles dans le premier intervalle de temps de trame -ITO-, des trames impaires d'une supertrame, lorsque les liaisons de transmission d'horloge sont des liaisons multiplexes temporelles, telles que définies plus haut.

Le noeud 2 qui est l'initiateur d'un échange d'informations entre deux noeuds du réseau privé 1 émet une proposition de synchronisation de l'un d'eux vis-à-vis des signaux d'horloge de l'autre auquel il est relié par une liaison de transmission numérique,via une de ses entrées d'horloge pilote; cette proposition est fonction de sa propre potentialité à être ou non fournisseur d'horloge telle qu'initialement présélectionnée.

Ceci se traduit en conséquence par l'envoi de trois bits correspondant soit à un ordre d'asservissement envoyé par le noeud initiateur à l'autre noeud, par exemple sous forme d'un code binaire 000, lorsque le noeud initiateur a d'origine été présélectionné comme susceptible de fournir les signaux d'horloge, soit à une demande adressée par le noeud initiateur à l'autre en vue d'être asservi, cet autre devant alors pouvoir fournir les signaux d'horloge vers le noeud initiateur devenu esclave, un code binaire 100 étant par exemple émis à cet effet par le noeud initiateur.

Une réponse est attendue par le noeud initiateur en provenance du noeud précédemment considéré du réseau privé, celle-ci peut prendre la forme d'un acquiescement à la proposition de synchronisation, traduit par exemple par un code binaire 001 ou un refus traduit par un code binaire 011, si le noeud interrogé est un noeud appartenant à l'arbre de transmission du réseau privé 1. Un code binaire 111 est fourni par défaut si le noeud interrogé n'est pas susceptible de prendre position ce qui se produit notamment lorsque le noeud interrogé appartient à un réseau public pour lequel les échanges d'information tels que décrits ci-dessus ne sont pas prévus.

Suite à l'interrogation par un noeud d'au moins un des deux noeuds auxquels il est relié par ses entrées d'horloge pilote correspondant à ces ports P1 et P2, ce noeud choisit l'horloge par rapport à laquelle il se synchronise en cas de perte ou de perte de validité des signaux d'horloge lui parvenant initialement par son entrée d'horloge principale P1.

Une perte de signaux est due par exemple à la mise hors activité de la liaison de transmission numérique d'informations unissant deux noeuds, une perte de validité étant due par exemple à une disparition du signal ou encore à une perte de synchronisation de trame.

Le choix d'une horloge par un noeud de l'arbre de synchronisation s'effectue en fonction des indications présélectionnées et mémorisées d'entrées d'horloge pilote et de potentialité ou non à être fournisseur d'horloge du noeud considéré vis à vis des noeuds auxquels ce noeud est relié par ses entrées d'horloge pilote.

A cet effet, chaque noeud 2 de l'arbre de synchronisation d'un réseau privé 1, selon l'invention, comporte un automate de traitement, au niveau de sa logique de commande 5 pour choisir la provenance des signaux d'horloge qui sont exploités par le noeud et qui sont éventuellement transmis aux noeuds dépendants.

Un noeud dépendant est susceptible d'être un noeud qui n'est asservi que dans une configuration donnée de l'arbre de synchronisation, par exemple le noeud 2D par rapport au noeud 2A sur la figure 3, c'est éventuellement un noeud ne disposant que d'une seule entrée de signaux d'horloge pilote tel le noeud 2C.

L'automate de traitement de chaque noeud d'arbre assure l'évolution de la distribution de signaux d'horloge au niveau du noeud dans cet arbre, à partir de la configuration initialement présélectionnée, en cas de perte ou de perte de validité des signaux d'horloge perturbant l'arbre de synchronisation et affectant directement ou indirectement le noeud considéré .

Dans le cas où un noeud 2 de l'arbre de synchronisation est relié par une entrée pilote à un noeud 4 de réseau public, il reçoit de celui-ci les signaux d'horloge par rapport auxquels il se synchronise et qu'éventuellement il retransmet, cette réception étant effectuée en priorité par son entrée d'horloge principale.

Chaque noeud 2 à deux entrées présélectionnées, d'un arbre de synchronisation selon l'invention, est aussi susceptible soit de recevoir des signaux d'horloge d'un autre noeud de cet arbre, soit de se synchroniser sur les signaux d'horloge qu'il produit lui-même en interne, comme indiqué plus haut.

Des signaux d'horloge sont reçus d'un noeud, en provenance d'un autre noeud de l'arbre, après une défaillance d'horloge entraînant une phase d'asservissement; cette dernière est initiée par l'un ou l'autre de ces deux noeuds, par exemple par émission des codes 000 ou 100 par le noeud initiateur, elle implique normalement un acquiescement du noeud interrogé qui répond par émission d'un code d'acceptation par exemple un code 001. Un noeud se synchronise en interne, si les signaux d'horloge externe qu'il est susceptible de recevoir n'ont pas un niveau de qualité supérieur à celui de l'horloge interne qu'il comporte.

Un code spécifique, par exemple 110, est alors susceptible d'être émis par un noeud synchronisé sur son horloge interne pour répondre à une proposition de synchronisation émise par un autre noeud, alors initiateur d'échange.

Un tel code spécifique 110 est également susceptible d'être émis dans différents autres cas par un noeud de l'arbre de synchronisation perdant les signaux d'horloge externe normalement reçus, via son entrée d'horloge principale et étant conduit à se synchroniser en interne.

Le non acquiescement d'un noeud à une proposition de synchronisation se traduit par une synchronisation du noeud initiateur soit sur des signaux d'horloge que lui-même produit, soit encore sur les signaux que l'autre produit, si alors le niveau de qualité des signaux d'horloge dont dispose le noeud initiateur est inférieur à celui dont dispose le noeud interrogé.

L'automate de traitement de chaque noeud d'arbre de synchronisation est conçu pour prendre une décision dans chacune des situations auxquelles un noeud est susceptible d'être confronté, à partir des indications de présélection prises initialement pour ce noeud et des informations de synchronisation, telles qu'évoquées ci-dessus qui sont reçues par l'intermédiaire des liaisons de transmission numériques 3 desservant les deux entrées pilotes du noeud où il est résident.

Il est ainsi possible d'obtenir une permanence de la synchronisation des noeuds d'un réseau privé de télécommunications sur la meilleure des horloges disponibles à un coût bien inférieur à celui nécessaire pour la mise en oeuvre des solutions connues pour les réseaux publics.

## Revendications

1. Procédé destiné à assurer une permanence de la synchronisation des noeuds (4) d'un réseau privé de télécommunications (1) sur la meilleure des horloges disponibles, dans lequel chaque noeud du réseau est normalement synchronisé par des signaux d'horloge d'origine externe qui lui parviennent par une des entrées individuelles de liaison, point-à-point, de transmission numérique d'informations (3) qu'il comporte, les noeuds de réseau privé comportant chacun au moins deux entrées de liaison de transmission numérique d'informations déterminant ensemble un arbre de synchronisation, auquel éventuellement se relient les noeuds qui ne disposent que d'une seule entrée de liaison de transmission numérique d'informations, ledit procédé prévoyant qu'en cas de perte ou de perte de validité -des signaux d'horloge transmis à l'un des noeuds déterminant l'arbre, un échange d'informations est déclenché, à l'initiative du premier noeud ayant constaté une perte, avec des noeuds de l'arbre auxquels il est relié en point-à-point, la dépendance ou non d'un noeud de l'arbre par rapport aux signaux d'horloge transmis par un autre noeud de l'arbre, via une des liaisons de transmission numérique d'informations, se déterminant par échange d'informations de noeud à noeud en fonction de potentialités respectives de fourniture de signaux d'horloge initialement attribuées à chacun des noeuds de l'arbre et des niveaux de qualité des signaux d'horloge dont chacun de ces noeuds dispose, caractérisé en ce que deux entrées de liaison de transmission numérique d'informations de chacun des noeuds de l'arbre sont présélectionnées l'une en tant qu'entrée d'horloge pilote principale (P1) et l'autre en tant qu'entrée d'horloge pilote de secours (P2), chaque noeud de l'arbre étant présélectionné pour être ou non fournisseur potentiel de signaux d'horloge vis-à-vis du ou des noeuds de l'arbre auquel ou respectivement auxquels il est relié en point-à-point par une liaison de transmission numérique d'informations, en ce que chaque noeud de l'arbre sélectionne lui-même la provenance des signaux par rapport auxquels il se synchronise, en cas de perte des signaux d'horloge d'origine externe lui, jusqu'alors reçus,via une de ses deux entrées d'horloge pilote, soit directement par lui-même, soit par l'intermédiaire d'un autre noeud de l'arbre et en ce que l'échange d'informations entre deux noeuds reliés en point-à-point de l'arbre en cas de perte des signaux d'horloge reçus par l'un d'eux se traduit par une proposition de synchronisation de l'un sur les signaux provenant de l'autre qui est émise par le premier des deux noeuds qui a connaissance de cette perte et qui est fonction de la potentialité affectée à ce premier noeud d'être fournisseur d'horloge ou non vis-à-vis de l'autre.

2. Procédé, selon la revendication 1, caractérisé en ce que la réponse d'un noeud de l'arbre de synchronisation à une proposition de synchronisation provenant d'un autre noeud auquel il est relié en point-à-point est ou non un acquiescement dépendant du niveau de qualité des signaux d'horloge dont il dispose par ailleurs.

3. Procédé, selon la revendication 2, caractérisé en ce que le non-acquiescement d'un noeud à une proposition de synchronisation d'un noeud, dit initiateur, se traduit par une synchronisation du noeud initiateur soit sur les signaux d'horloge que lui-même produit, soit sur les signaux d'horloge de l'autre noeud, si le niveau de qualité des signaux d'horloge dont dispose le noeud initiateur est inférieure à celle dont dispose le noeud interrogé.

4. Réseau privé de télécommunications, pour la mise en oeuvre du procédé selon au moins l'une des revendications 1 à 3, composé de noeuds (2) reliés entre eux en point-à-point par des liaisons de transmission numérique d'informations (3), chaque noeud étant normalement synchronisé par des signaux d'horloge externe qui sont transmis par une des entrées individuelles de liaison (3) du noeud par un autre noeud du réseau privé ou par un noeud (4) de réseau public, chaque noeud de réseau privé comportant des moyens lui permettant d'échanger des informations de sélection d'horloge avec chacun des noeuds auxquels ce noeud est relié en point-à point, chaque noeud comportant des moyens de choix de signaux d'horloge permettant une sélection de provenance en fonction de présélections propres à ce noeud mémorisées au niveau de ce noeud et de niveaux de qualité de signaux d'horloge d'origine externe, ou à défaut interne, restant disponible pour le noeud en cas de perte -ou de perte de validité - des signaux d'horloge jusqu'alors reçus, caractérisé en ce qu'il comporte un arbre de synchronisation composé des noeuds du réseau privé qui comportent au moins deux entrées de liaison de transmission numérique d'informations, en ce que deux des entrées de chacun des noeuds de l'arbre sont présélectionnées l'une en tant qu'entrée d'horloge pilote principale (P1) et l'autre en tant qu'entrée d'horloge pilote de secours pour ce noeud, chaque noeud de l'arbre étant présélectionné pour être ou non fournisseur potentiel de signaux d'horloge vis-à-vis du ou des noeuds de l'arbre auquel ou respectivement auxquels il est relié en point-à-point par une ou des liaisons de transmission numérique d'informations.

## Patentansprüche

1. Verfahren, mit dem permanent die Synchronisation der Knoten (4) eines privaten Nachrichtennetzes (1) auf den besten der verfügbaren Takte gewährleistet ist, wobei jeder Knoten des Netzes normalerweise durch von außen kommende Taktsignale synchronisiert wird, die über einen der individuellen Eingänge und digitale Informationsübertragungsverbindungen (3) vom Punkt-zu-Punkt-Typ des Netzes ankommen, wobei die Knoten des privaten Netzes je mindestens zwei Eingänge der digitalen Informationsübertragungsverbindung besitzen, die gemeinsam einen Synchronisationsbaum bestimmen, an den ggf. auch die Knoten angeschlossen sind, die nur einen einzigen Eingang für eine digitale Informationsübertragungsverbindung besitzen, wobei das Verfahren im Fall eines Taktsignalverlusts oder eines Verlusts der Gültigkeit der an einen der den Baum bestimmenden Knoten übertragenen Taktsignale einen Austausch von Informationen auf Veranlassung des ersten Knotens, der einen Verlust festgestellt hat, mit Knoten des Baums vorsieht, an die er über eine Punkt-zu-Punkt-Verbindung angeschlossen ist, wobei die Abhängigkeit eines Knotens des Baums bezüglich eines übertragenen Taktsignals von einem anderen Knoten des Baums über eine digitale Informationsübertragungsverbindung durch den Austausch von Informationen zwischen den Knoten abhängig von den Möglichkeiten der Lieferung von ursprünglich jedem der Knoten des Baums zugeteilten Taktsignalen und von den Qualitätsniveaus der Taktsignale bestimmt wird, über die jeder dieser Knoten verfügt, dadurch gekennzeichnet, daß zwei Eingänge für eine digitale Informationsübertragungsverbindung jedes der Knoten des Baums vorausgewählt sind, nämlich einer als Hauptpilottakteingang (P1) und der andere als Reserve-Pilottakteingang (P2), daß jeder Knoten des Baums als potentieller Lieferant von Taktsignalen gegenüber dem oder den Knoten des Baums vorausgewählt oder nicht vorausgewählt wird, an den oder die er über eine digitale Informationsübertragungsverbindung vom Punkt-zu-Punkt-Typ angeschlossen ist, daß jeder Knoten des Baums selbst die Herkunft der Signale bestimmt, auf die er sich synchronisiert im Fall eines Verlusts der ursprünglichen von außen kommenden Taktsignale, die bis dahin über einen der beiden Pilottakteingänge entweder direkt durch ihn oder über einen anderen Knoten des Baums empfangen wurden, und daß der Austausch von Informationen zwischen zwei über eine Punkt-zu-Punkt-Verbindung verbundenen Knoten des Baums im Fall eines Verlusts der Taktsignale durch einen dieser Knoten einen Vorschlag zur Synchronisation eines der Knoten auf die vom anderen Knoten kommenden Signale bedeutet, wobei dieser Vorschlag vom ersten der beiden Knoten, der von diesem Verlust Kenntnis hat, ausgesendet wird und davon abhängt, ob dieser erste Knoten die Möglichkeit hat, dem anderen Knoten Taktsignale zu liefern oder nicht.

2. Verfahren nach Anspruch 1, dadurch gekennzeichnet, daß die Antwort eines Knotens des Synchronisationsbaums auf einen Synchronisationsvorschlag, der von einem anderen Knoten kommt, mit dem er über eine Punkt-zu-Punkt-Verbindung verbunden ist, eine Zustimmung oder Ablehnung bedeutet, je nach dem Qualitätsniveau der Taktsignale, über die der Knoten ansonsten verfügt.

3. Verfahren nach Anspruch 2, dadurch gekennzeichnet, daß die Ablehnung eines Synchronisationsvorschlags eines Knotens, der die Initiative ergriffen hat, dazu führt, daß der die Initiative ergreifende Knoten sich entweder auf die Taktsignale synchronisiert, die er selbst produziert, oder auf die Taktsignale des anderen Knotens, wenn das Qualitätsniveau der Taktsignale, über die der die Initiative ergreifende Knoten verfügt, geringer als diejenige der Taktsignale ist, über die der befragte Knoten verfügt.

4. Privates Nachrichtennetz zur Durchführung des Verfahrens nach mindestens einem der Ansprüche 1 bis 3, wobei das Netz Knoten (2) besitzt, die miteinander über digitale Informationsübertragungsverbindungen vom Punkt-zu-Punkt-Typ (3) verbunden sind, wobei jeder Knoten normalerweise durch äußere Taktsignale synchronisiert wird, die über einen individuellen Verbindungseingang (3) des Knotens von einem anderen Knoten des privaten Netzes oder von einem Knoten (4) eines öffentlichen Netzes übertragen werden, wobei jeder Knoten des privaten Netzes Mittel aufweist, die es ihm erlauben, Informationen über die Auswahl des Taktgebers mit jedem der Knoten auszutauschen, an die dieser Knoten über eine Punkt-zu-Punkt-Verbindung angeschlossen ist, wobei jeder Knoten Mittel zur Auswahl von Taktsignalen aufweist, die eine Selektion der Herkunft von Taktsignalen abhängig von einer eigenen Vorauswahl dieses Knotens, die in Höhe dieses Knotens gespeichert ist, und abhängig vom Qualitätsniveau der von außen kommenden Taktsignale oder, falls diese fehlen, der inneren Taktsignale erlauben, die für den Knoten im Fall eines Verlusts der bis dahin empfangenen Taktsignale oder der Gültigkeit dieser Taktsignale verfügbar bleiben, dadurch gekennzeichnet, daß das Netz einen Synchronisationsbaum aufweist, der aus den Knoten des privaten Netzes besteht, daß diese Knoten mindestens zwei Eingänge für eine digitale Informationsübertragungsverbindung enthalten, daß zwei Eingänge jedes der Knoten des Baums vorausgewählt werden, und zwar einer als Hauptpilottakteingang (Pl) und der andere als Reserve-Pilottakteingang für diesen Knoten, wobei jeder Knoten des Baums als potentieller Lieferant von Taktsignalen für den Knoten oder die Knoten des Baums ausgewählt wird oder nicht, an den oder die er über eine der digitalen Informationsübertragungsverbindungen vom Punkt-zu-Punkt-Typ angeschlossen ist.

## Claims

1. Method of synchronising the nodes (4) of a private telecommunication network (1) to the best available clock at all times in which each node of the network is normally synchronised by externally originated clock signals which reach it via one of its inputs connected to a point-to-point digital information transmission link (3), the private network nodes each having at least two digital information transmission link inputs together determining a synchronisation tree to which the nodes which have only one digital information transmission link input may be connected, in which method in the event of loss of clock signals or of valid clock signals transmitted to one of the nodes of the tree an exchange of information is initiated at the initiative of the first node that detects such loss with nodes of the tree to which it is connected by point-to-point links, the dependency or otherwise of a node of the tree on clock signals transmitted by another node of the tree via one of the digital information transmission links being determined by exchange of information from node to node in accordance with respective potentialities to supply clock signals initially attributed to each of the nodes of the tree and with quality levels of the clock signals available to each of the nodes, characterised in that two digital information transmission link inputs of each node of the tree are preselected, one as a main master clock input (P1) and the other as a backup master clock input (P2), each node of the tree being preselected to be or not to be a potential supplier of clock signals to node or nodes of the tree to which it is connected by a point-to-point digital information transmission link, in that each node of the tree itself selects the source of the signals to which it synchronises itself in the event of loss of externally originated clock signals previously received via one of its two master clock inputs, either directly by itself or through the intermediary of another node of the tree, and in that the exchange of information between two nodes of the tree connected by a point-to-point link in the event of loss of clock signals received by one of them is embodied in a proposal to synchronise one of them to the signals from the other of them sent by the first of the two nodes to detect the loss and dependent on the potentiality allocated to the first node to be or not to be a clock supplier to the other.

2. Method according to claim 1 characterised in that the response of a node of the synchronisation tree to a synchronisation proposal from another node to which it is connected by a point-to-point link is or is not an acquiescence depending on the quality level of the clock signals otherwise available to it.

3. Method according to claim 2 characterised in that non-acquiescence of a node to a synchronisation proposal from an initiator node is embodied in synchronisation of the initiator node either to clock signals that it produces itself or to clock signals from the other node if the quality level of the clock signals available to the initiator node is below that available to the interrogated node.

4. Private telecommunication network for implementing the method according to any one of claims 1 to 3 comprising nodes (2) interconnected by point-to-point digital information transmission links (3), each node being normally synchronised by externally originated clock signals which are transmitted via one of the individual inputs of the node connected to a link (3) by another node of the private network or by a public network node (4), each private network node including means enabling it to exchange clock selection information with each of the nodes to which it is connected by a point-to-point link, each node having clock signal selection means enabling source selection in accordance with preselections specific to that node stored at that node and quality levels of externally originated clock signals, or internally originated clock signals if no such externally generated clock signals are available, remaining available to the node in the event of loss of clock signals or of valid clock signals received until then, characterised in that it includes a synchronisation tree made up of nodes of the private network which include at least two digital information transmission link inputs, in that two inputs of each node of the tree are preselected, one as the main master clock input (P1) and the other as a backup master clock input for that node, each node of the tree being preselected to be or not to be a potential supplier of clock signals to the node or nodes of the tree to which it is connected by one or more point-to-point digital information transmission links.
